(19) Europäisches Patentamt

European Patent Office

Office européen des brevets

(11) **EP 4 509 255 B1**

(12) **EUROPEAN PATENT SPECIFICATION**

(45) Date of publication and mention
of the grant of the patent:
**01.07.2026  Bulletin 2026/27**

(21) Application number: **24191621.2**

(22) Date of filing: **30.07.2024**

(51) International Patent Classification (IPC):
**B23K 9/095** *(2006.01)*       **B23K 9/18** *(2006.01)*
**B23K 9/32** *(2006.01)*       **B23K 37/02** *(2006.01)*

(52) Cooperative Patent Classification (CPC):
**B23K 9/0953; B23K 9/186; B23K 9/32;
B23K 37/0294**

(54) **SUBMERGED ARC WELDING MACHINE AND SUBMERGED ARC WELDING METHOD**

UNTERPULVER-LICHTBOGENSCHWEISSMASCHINE UND
UNTERPULVER-LICHTBOGENSCHWEISSVERFAHREN

MACHINE DE SOUDAGE À L'ARC SUBMERGÉ ET PROCÉDÉ DE SOUDAGE À L'ARC SUBMERGÉ

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **18.08.2023  JP 2023133552**

(43) Date of publication of application:
**19.02.2025  Bulletin 2025/08**

(73) Proprietor: **Daihen Corporation
Osaka-shi,
Osaka 532-8512 (JP)**

(72) Inventors:
• **BABA, Hayato**
  **OSAKA, 5328512 (JP)**
• **HONDA, Reo**
  **OSAKA, 5328512 (JP)**

(74) Representative: **Cabinet Beaumont
4, Place Robert Schuman
B.P. 1529
38025 Grenoble Cedex 1 (FR)**

(56) References cited:
**US-A- 5 278 390         US-A1- 2009 261 073
US-A1- 2015 076 119**

## Description

The present invention relates to a submerged arc welding machine and a submerged arc welding method, see claims 1 and 3.

[Background Art]

In AC submerged arc welding, since the polarity of a welding wire is alternately switched between positive and negative, it is known that a penetration shape and a wire deposition rate can be controlled by manipulating lengths or a peak current of an electrode positive (EP) period and an electrode negative (EN) period (Patent Document 1, for example). The EP period is a period in which the voltage polarity of the welding wire is positive and the EN period is a period in which the voltage polarity of the welding wire is negative.

As the EP period is lengthened or the peak current of the EP period is made larger, there is a tendency that the penetration shape becomes narrower and deeper, and the wire deposition rate decreases. In addition, as the EN period is lengthened or the peak current of the EN period is made larger, there is a tendency that the penetration shape becomes wider and the wire deposition rate increases.

[Prior Art Document]

[Patent Document]

[Patent Document 1] Japanese Patent Laid-Open Publication No. 2018-153866) US2009/261073 relates to a system and methods of using variable waveform AC arc welding to achieve specific weld metal chemistries.

US2015/076119 relates to a synchronized rotating arc welding method and system.

[Summary of Invention]

[Problems to be Solved by Invention]

However, when the length or the peak current of the EP period and the EN period varies, an effective current (effective value of an output current) varies in accordance with the variation. Therefore, typically, a method in which a plurality of related parameters are changed in association with each other so that the variation in the effective current becomes small can be used. When the parameters are changed in association with each other, the variation in the effective current can be suppressed to a certain extent, but in simple manipulation (change in association with each other), the variation in the effective current cannot be completely eliminated, and a large effective current variation exceeding 100 A may occur in some cases.

An object of the present invention is to provide a submerged arc welding machine and a submerged arc welding method which are, even in a case of changing various manipulation parameters for manipulating an AC current waveform in AC submerged arc welding, capable of quickly calculating other various parameters of the AC current waveform to obtain an effective current as a predetermined target current.

[Means for Solving Problems]

A submerged arc welding machine according to an aspect of the present invention is a submerged arc welding machine as defined in claim 1, and including: a storage unit configured to store a plurality of tables in which two or three manipulation parameters and function values are associated with each other in order to associate a plurality of the manipulation parameters for manipulating an AC waveform of a current output from a welding power supply and parameters for determining the AC waveform in combination with the plurality of manipulation parameters with matching between an effective value of the output current and a predetermined current set as a constraint condition; a setting reception unit configured to receive the plurality of manipulation parameters; and an arithmetic processing unit configured to calculate the parameters with reference to the plurality of tables stored in the storage unit by using the plurality of manipulation parameters received by the setting reception unit.

A submerged arc welding method according to another aspect of the present invention is a submerged arc welding method as defined in claim 3, and including: preparing a plurality of tables in which two or three manipulation parameters and function values are associated with each other in order to associate a plurality of the manipulation parameters for manipulating an AC waveform of a current output from a welding power supply and parameters for determining the AC waveform in combination with the plurality of manipulation parameters with matching between an effective value of the output current and a predetermined current set as a constraint condition; receiving the plurality of manipulation parameters; and calculating the parameters with reference to the plurality of tables by using the plurality of received manipulation parameters.

[Effect of Invention]

According to the aspects of the present invention, even in a case of changing various manipulation parameters for manipulating an AC current waveform in AC submerged arc welding, it is possible to quickly calculate other various parameters of the AC current waveform to obtain an effective current as a predetermined target current.

[Brief Description of Drawings]

FIG. 1 is a schematic view illustrating a configuration of a submerged arc welding machine according to the present embodiment;
FIG. 2 is a block diagram illustrating a configuration of the submerged arc welding machine according to the present embodiment;
FIG. 3 is a schematic view illustrating an example of an AC waveform of a current output from a welding power supply; and
FIG. 4 is a flowchart illustrating a control method according to the present embodiment.

[Mode for Carrying Out Invention]

Specific examples of a submerged arc welding machine and a submerged arc welding method according to an embodiment of the present invention will be described with reference to the accompanying drawings. Note that, the invention is not limited to the examples, and is represented by the appended claims.
Hereinafter, the invention will be described in detail on the basis of the drawings illustrating an embodiment.

<Configuration of Submerged Arc Welding Machine>

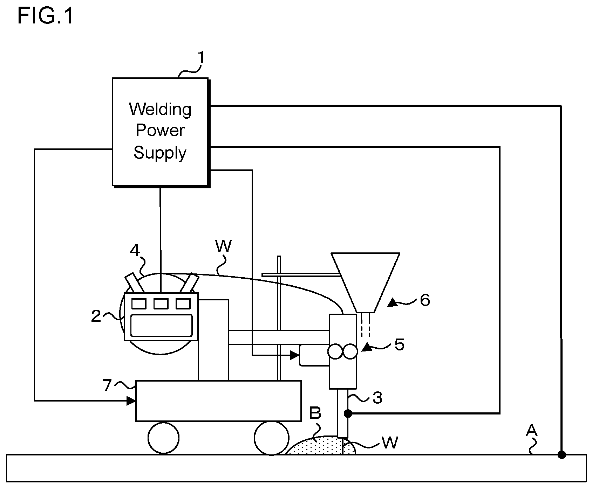

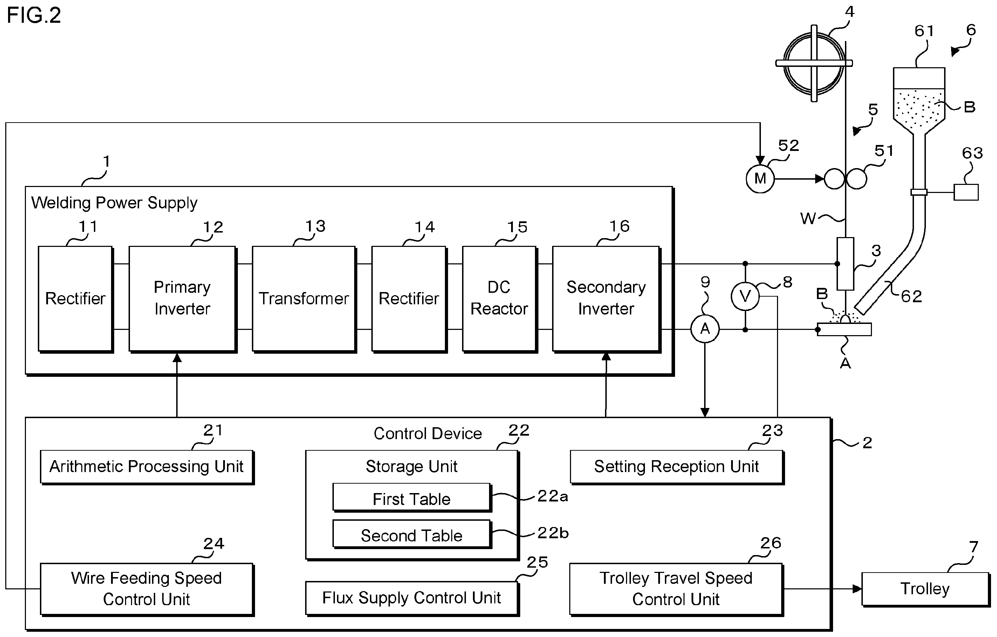

FIG. 1 is a schematic view illustrating a configuration of a submerged arc welding machine according to the present embodiment, and FIG. 2 is a block diagram illustrating a configuration of the submerged arc welding machine according to the present embodiment. The submerged arc welding machine according to the present embodiment includes a welding power supply 1, a control device 2, a torch 3, a wire reel 4, a wire feeding device 5, a flux supply device 6, a trolley 7, a voltage sensor 8, and a current sensor 9.
The torch 3 is formed from a conductive material such as a copper alloy, and includes a cylindrical contact tip that guides a welding wire W to a portion-to-be-welded of a base material A, and supplies a welding current necessary for occurrence of arc. The contact tip comes into contact with the welding wire W that is inserted into the contact tip and supplies the welding current to the welding wire W.
The wire feeding device 5 includes a feeding roller 51 that pulls out the welding wire W wound around the wire reel 4 and feeds the welding wire W to the torch 3, and a motor 52 that rotates the feeding roller 51. The wire feeding device 5 feeds the welding wire W to the torch 3 by rotating the feeding roller 51. A feeding rate of the welding wire W is adjusted in correspondence with a welding voltage so that an arc length does not fluctuate. The feeding rate of the welding wire W by the wire feeding device 5 is controlled by the control device 2.
The flux supply device 6 includes a flux hopper 61, a nozzle 62, a valve, 63, a flux recovery machine (not illustrated), and the like. The flux hopper 61 stores a flux B that is put from an upper side, and the flux B is supplied to the portion-to-be-welded of the base material A through the nozzle 62 connected to a lower side of the flux hopper 61. The valve 63 opens or closes a route from the flux hopper 61 to the nozzle 62, and adjusts the supply amount of the flux B. The opening/closing and the amount of opening/closing of the valve 63 are controlled by the control device 2. Note that, the opening/closing and the amount of opening/closing of the valve 63 may be configured to be manually manipulated.
The trolley 7 is a transport device on which the welding power supply 1, the control device 2, the torch 3, the wire reel 4, the wire feeding device 5, the flux supply device 6, and the like are mounted, and moves along a welding line. The trolley 7 includes a travel motor that rotates wheels. The torch 3 and the flux supply device 6 move along the welding line of the base material A due to the traveling trolley 7, the granular flux B stored in the flux hopper 61 is scattered along the welding line, and the welding wire W is fed into the flux B by the wire feeding device 5. A travel speed of the trolley 7 is controlled by the control device 2.
The voltage sensor 8 is a sensor that detects a voltage between an arc voltage detection lead wire attached to the torch 3 and an arc voltage detection lead wire attached to the base material A as a welding voltage (arc voltage), and outputs a voltage value signal indicating a detected voltage value to the control device 2.

The current sensor 9 is a sensor that detects a welding current that is supplied from the welding power supply 1 to the welding wire W through the torch 3, and flows to the base material A through the arc, and outputs a current value signal indicating a detected current value to the control device 2.

The welding power supply 1 is an inverter-controlled AC welding power supply having a constant current characteristic, and includes a rectifier 11, a primary inverter 12, a transformer 13, a rectifier 14, a DC reactor 15, and a secondary inverter 16 which are sequentially connected in series from an input side of a commercially available power supply. The welding power supply 1 is connected to the contact tip of the torch 3 and the base material A through a power supply cable. The welding power supply 1 supplies a welding power between the welding wire W and the base material A by using the commercially available power supply as an input to generate an arc.

The rectifier 11 rectifies an alternating current of the commercially available power supply and outputs the rectified current to the primary inverter 12. The primary inverter 12 is driven at a high frequency of dozen kHz to several tens of kHz, and applies a high-frequency alternating current to a primary coil of the transformer 13. The transformer 13 transforms the alternating current and the transformed alternating current is rectified by the rectifier 14, and is output to the secondary inverter 16 through the DC reactor 15. The secondary inverter 16 is driven at a low frequency of several tens of Hz to several hundreds of Hz, and outputs a low-frequency alternating current. Due to output of the alternating current, an AC welding voltage is applied between the torch 3 and the base material A, and the welding current supplied from the welding power supply 1 flows from the torch 3 to the welding wire W through a power supply cable. Welding of the base material A is performed by heat of an arc generated between the base material A and the welding wire W due to the welding current. The arc is covered with the flux B supplied by the flux supply device 6.

The control device 2 is a circuit that outputs a control signal to each of the primary inverter 12 and the secondary inverter 16 of the welding power supply 1, and independently digitally controls the inverters. In addition, the control device 2 controls a feeding speed of the welding wire W by the wire feeding device 5, the supply amount of the flux B by the flux supply device 6, a travel speed of the trolley 7, and the like.

The control device 2 is a processor, and includes an arithmetic processing unit (an arithmetic processor) 21 such as a CPU and a multi-core CPU, a storage unit (a storage) 22, a setting reception unit 23, a wire feeding speed control unit 24, a flux supply control unit 25, and a trolley travel speed control unit 26.

The storage unit 22 is a storage device including a non-volatile memory such as a read only memory (ROM) and EEPROM, a volatile memory such as a random access memory (RAM). The storage unit 22 stores a first table 22a and a second table 22b which are used to make an effective value of an alternating current and a setting current match each other. Details of the first table 22a and the second table 22b will be described later.

The setting reception unit 23 is an input device such as a button, a key, and a dial, and receives setting information including a setting current of the submerged arc welding machine, and other welding conditions. In addition, the setting reception unit 23 receives setting or change of manipulation parameters for manipulating an AC waveform of a current output from the welding power supply 1.

The wire feeding speed control unit 24 is connected to a drive circuit of the motor 52, and outputs a rotation control signal corresponding to a wire feeding speed to the drive circuit to control feeding of the welding wire W by the wire feeding device 5. The feeding roller 51 rotates at a speed corresponding to the rotation control signal, and the welding wire W is fed to the portion-to-be-welded of the base material A through the torch 3.

The arc length is proportional to the welding voltage (arc voltage). The welding voltage is a voltage between the contact tip of the torch 3 and the base material A and is detected by the voltage sensor 8. A feeding speed setting value that is a target value is set in the wire feeding speed control unit 24. The wire feeding speed control unit 24 controls the feeding speed of the welding wire W so that the arc length becomes constant by setting a difference between the feeding speed setting value and the welding voltage detected by the voltage sensor 8 as a manipulation amount.

The flux supply control unit 25 is connected to a drive circuit that opens or closes the valve 63 of the flux supply device 6, and outputs an opening/closing signal corresponding to the supply amount of the flux to the drive circuit to control the supply of the flux B by the flux supply device 6. Note that, in a case where the opening/closing of the valve 63 is manually manipulated, the flux supply control unit 25 is not used.

The trolley travel speed control unit 26 is connected to a drive circuit that drives a travel motor of the trolley 7, and outputs a travel control signal corresponding to a travel speed of the trolley 7 to the drive circuit to control traveling of the trolley 7.

In addition, the voltage sensor 8, the current sensor 9, the primary inverter 12, and the secondary inverter 16 are connected to a signal input/output terminal (not illustrated) of the control device 2, and the control device 2 PWM-controls the primary inverter 12 to operate in a constant current characteristic on the basis of the welding condition that is set, and the welding current and the welding voltage which are detected. In addition, the control device 2 manipulates or controls an AC current waveform on the basis of the setting current received by the setting reception unit 23 and a manipulation parameter. A required welding voltage is applied between the base material A and the welding wire W, and a welding current flows therebetween.

<Method of Constantly Maintaining Effective Current>

The control device 2 according to the present embodiment is a welding system capable of quickly calculating the peak current of the EN period to obtain in correspondence with setting values of various parameters defining an AC current waveform so that an effective current according to the setting current can be obtained. According to this, the submerged arc welding machine can constantly maintain the effective current immediately after starting output of an alternating current, and can stabilize a penetration depth.

(A) Determination of Parameter Manipulation Method

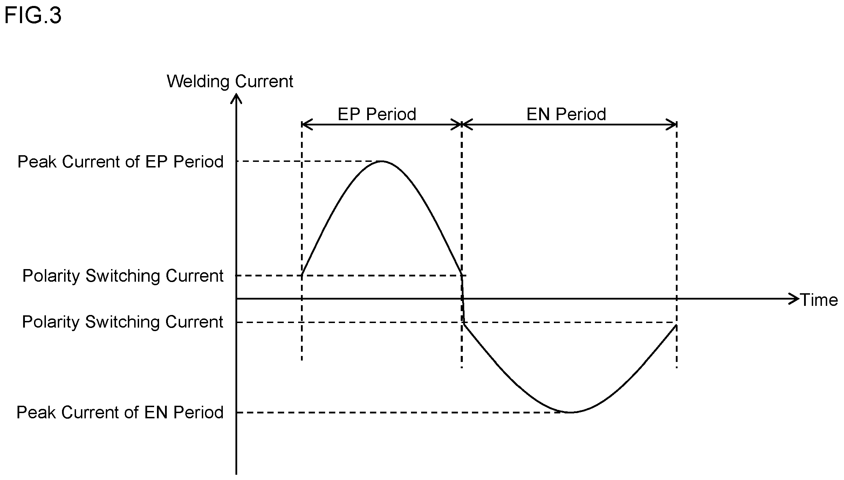

FIG. 3 is a schematic view illustrating an example of an AC waveform of a current output from the welding power supply 1. The AC waveform illustrated in FIG. 3 is a sinusoidal wave-based waveform.

First, how to manipulate an AC waveform, and a plurality of parameters relating to adjustment thereof are determined. That is, the plurality of parameters are quantities defining a shape pattern of the AC waveform. Although determination depends on the shape of the AC waveform and a control method, for example, in a sinusoidal waveform, the lengths of the electrode positive (EP) period and the electrode negative (EN) period, peak currents of the EP period and the EN period, and a polarity switching current are parameters determining the AC waveform.

The EP period is a period in which a voltage polarity of the welding wire is positive, and the EN period is a period in which the voltage polarity of the welding wire is negative.

The polarity switching current is a threshold current for switching the positive and negative of an AC current. When the current decreases, there is a concern that the rigidity of the arc weakens, magnetic blow occurs, and thus the penetration becomes unstable, and thus in order to suppress the magnetic blow by shortening the period in which the current decreases, as illustrated in FIG. 3, control for changing the current at a high speed between polarity switching currents may be used in combination.

When all of the parameters are directly set, only one AC waveform is determined, and thus it is difficult to make the effective current and the setting current match each other. In addition, when the lengths of the EP period and the EN period are individually set, an AC frequency varies, and thus it is difficult to adjust the welding condition.

Here, a plurality of manipulation parameters for manipulating an AC waveform of a current output from the welding power supply 1 are determined. For example, an EN ratio, an EP/EN peak current ratio, a polarity switching current, and a setting current are set as manipulation parameters. The EN ratio is a ratio of the EN period to a length of one AC cycle, and the EP/EN peak current ratio is a ratio of the peak current of the EP period to the peak current of the EN period. The setting current is a current value that is set as a target value of an effective value of a current output from the welding power supply 1.

As described above, in a case where the manipulation parameters are determined, the lengths of the EP period and the EN period are determined from the AC frequency and the EN ratio which are set. In addition, the polarization switching current and the setting current are directly set and a single value is determined. On the other hand, with regard to the peak currents of the EP period and the EN period, ratios thereof are set but values thereof are not determined and have the degree of freedom in manipulation. Here, cycles, and peak currents of the EP period and the EN period are determined with matching between the effective current and the setting current set as a constraint condition. That is, the peak currents of the EP period and the EN period are calculated so that the effective current matches the setting current in correspondence with the various manipulation parameters.

(B) Analytical Derivation of Peak Current (Preliminary Derivation)

The above-described respective peak currents are analytically derived. The peak currents of the respective periods can be expressed as a function of various manipulation parameters other than the peak currents. However, it cannot be said that all manipulation parameters have an influence on the peak currents in accordance with a waveform pattern or a control method.

Note that, an expression for deriving the peak currents obtained here is a complicated calculation expression including a radical sign and the like in many cases, and thus when directly calculating the peak values algebraically, a calculation load is large and time is taken. However, since any of the above-described various manipulation parameters may be changed during welding, in a case where setting is changed, it is necessary for the peak currents to be quickly calculated again and updated, for example, within a short time of approximately 10 ms or shorter. Here, calculation of the peak currents within a short time is realized by the following method.

(C) Variable Separation of Peak Current Derivation Expression

The above-described peak current derivation expression is transformed into a composite function of a plurality of element functions with as few variable as possible. The element functions constituting the composite function are preferably functions in which two or three manipulation parameters are set as variables. More preferably, the element functions are preferably functions in which two manipulation parameters are set as variables. For example, in the above-described sinusoidal wave-based waveform, the peak currents can be expressed as a composite function of an element function in which two values including the EN ratio and the EP/EN peak current ratio are set as variables and an element function in which two values including the polarity switching current and the setting current are set as variables. The composite function can be expressed by addition, subtraction, multiplication, and division of a plurality of element functions.

(D) Algebraic Calculation of Element Function

For each of the above-described element functions, calculation results in a case where each variable, that is, each manipulation parameter varies at regular intervals are tabulated. The arithmetic processing unit 21 calculates the calculation results of each element function from an actually set value of each variable by linear complementation on the basis of a plurality of tables. Note that, the reason why the variable separation into the element functions is performed is that a table can be simplified as types of the variables are fewer. Details thereof will be described later.

(E) Calculation of Peak Current

The peak currents of the EP period and the EN period are calculated from the obtained element functions. Specifically, a function value is obtained with reference to a plurality of tables by using a manipulation parameter as a key, and the peak currents of the EP period and the EN period are calculated by adding, subtracting, multiplying, and dividing the function value.
According to the above-described procedure, even in a case where the manipulation parameter is changed during welding, the peak currents of the EP period and the EN period are quickly calculated so that an effective current according to a setting current can be obtained in correspondence with setting values of various parameters. The control device 2 can constantly maintain the effective current immediately after starting output of an alternating current or after changing the welding condition and can stabilize a penetration depth by controlling an output of the welding power supply 1 on the basis of the calculated peak currents of the EP period and the EN period, and other parameter values.

<Examples in Case of Sinusoidal Waveform>

(A) Determination of Parameter Manipulation Method

An EN ratio, an EP/EN peak current ratio, a polarity switching current, and a setting current are set as manipulation parameters for manipulating an AC waveform of a current.

(B) Analytical Derivation of Peak Current (Preliminary Derivation)

The peak current of the EN period and the peak current of the EP period are analytically derived from the following Expressions (1) and (2).

$$I_n = \sqrt{\frac{(r/_{1-r})+1}{(r/_{1-r}) \times R^2 + 1}} \left( \frac{-4I_{chg}}{\pi} + \sqrt{\frac{16 I_{chg}{}^2}{\pi^2} + 2I_{set}{}^2 - 2I_{chg}{}^2} + I_{chg} \right) \ldots (1)$$

$I_p = RI_n \cdots (2)$
Provided that,
$I_n$: peak current in EN period
$I_p$: peak current in EP period
$r$: EN ratio
$R$: EP/EN peak current ratio
$I_{chg}$: polarity switching current
$I_{set}$: setting current

(C) Variable Separation of Peak Current Derivation Expression

The peak current in the EN period can be subjected to variable separation as in the following Expression (5) by using the following Expressions (3) and (4).

$$F(r, R) = \sqrt{\frac{(r/_{1-r}) + 1}{(r/_{1-r}) \times R^2 + 1}} \quad \cdots (3)$$

$$G(I_{chg}, I_{set}) = \frac{-4I_{chg}}{\pi} + \sqrt{\frac{16I_{chg}^2}{\pi^2} + 2I_{set}^2 - 2I_{chg}^2} + I_{chg} \quad \cdots (4)$$

$$I_n = F(r, R) \times G(I_{chg}, I_{set}) \quad \cdots (5)$$

(D) Algebraic Calculation of Element Function

A calculation result (function value) of the function F in a case where the EN ratio r and the EP/EN peak current ratio R are changed at regular intervals, and a calculation result (function value) of the function G in a case where the polarity switching current $I_{chg}$ and the setting current $I_{set}$ are changed at regular intervals are calculated and are tabulated in advance. That is, the storage unit 22 of the control device 2 stores the first table 22a in which the EN ratio r, the EP/EN peak current ratio R, and the function value of the function F are associated with each other. In addition, the storage unit 22 stores the second table 22b in which the polarity switching current $I_{chg}$, the setting current $I_{set}$, and the function value of the function G are associated with each other. The control device 2 calculates calculation results (function values) of the function F and the function G by linear complementation in correspondence with various actually set manipulation parameters by using the first table 22a and the second table 22b.

(E) Calculation of Peak Current

The control device 2 calculates the peak currents of the EP period and the EN period by the above-described Expressions (5) and (2).

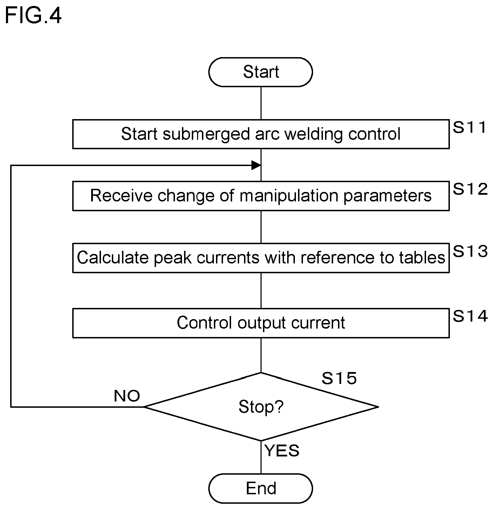

FIG. 4 is a flowchart illustrating a control method according to the present embodiment. In the following description, control of an AC waveform output from the welding power supply 1 will be mainly described, and other details of the arc welding control will be omitted or simplified.
The control device 2 receives various settings of the submerged arc welding machine, and starts submerged arc welding control (step S11).
Next, the control device 2 receives change of manipulation parameters by the setting reception unit 23 (step S12). Then, the control device 2 calculates the peak currents of the EN period and the EP period with reference to the first table 22a and the second table 22b by using manipulation parameters after change as a key (step S13). The control device 2 controls an output current of the welding power supply 1 on the basis of the peak currents of the EN period and the EP period, and various parameters based on the set manipulation parameters (step S14).
Hereinafter, the control device 2 determines whether or not a predetermined termination condition is satisfied (step S15), and terminates the welding process in a case where the termination condition is satisfied (step S15: YES). In a case where the termination condition is not satisfied (step S15: NO), the control device 2 repetitively executes the processes from step S12 to step S14, and executes the submerged arc welding method.
As described above, according to the present embodiment, in the AC submerged arc welding, even in a case where various manipulation parameters for manipulating an AC current waveform are changed, it is possible to quickly calculate the peak currents which make the effective current match the setting current. Accordingly, even when setting the various manipulation parameters to certain values, it is possible to obtain the effective current according to the setting current, and according to this, it is possible to constantly maintain the effective current immediately after starting output of an alternating current and it is possible to stabilize the penetration depth.
Note that, in the present embodiment, description has been given of control of making the effective value of the output current and the setting current match each other, but the peak currents may be calculated so that the effective current matches an index other than the setting current. For example, in a case where the effective current is moved along a desired external characteristic and constant voltage characteristics are reproduced, the peak currents may be sequentially recalculated and updated so that an output effective current matches a target effective current that varies from moment to moment according to feedback values of the effective current and the effective voltage.
In addition, the peak currents of the EP period and the EN period may be directly set, and the length of the EP period or the length of the EN period based on the EN ratio, or other parameters such as the polarity switching current may be calculated, and output of the AC current may be controlled so that the effective current matches the setting current.

In addition, in the polarity switching current, a value for switching from the EN period to the EP period and a value for switching from the EP period to the EN period may be different from each other.

Furthermore, in the present embodiment, description has been given of an example of manipulating a sinusoidal wave-based waveform, but the invention is also applicable to a case of manipulating a trapezoidal wave or any current waveform. Note that, in a case of the trapezoidal wave, an AC frequency, an EN ratio, an EP/EN peak current ratio, an upslope period ratio, a downslope period ratio, a polarity switching current, and a setting current may be set as the manipulation parameters. The upslope period ratio is a parameter that determines that a current is increased by a certain extent of time ratio with respect to the length of the EP period. The downslope period ratio is a parameter that determines that the current is reduced by a certain extent of time ratio with respect to the length of the EN period.

[Description of Reference Numerals]

    1: welding power supply
    2: control device
    3: torch
    4: wire reel
    5: wire feeding device
    6: flux supply device
    7: trolley
    8: voltage sensor
    9: current sensor
    21: arithmetic processing unit
    22: storage unit
    22a: first table
    22b: second table
    23: setting reception unit
    24: wire feeding speed control unit
    25: flux supply control unit
    26: trolley travel speed control unit
    A: base material
    B: flux
    W: welding wire

**Claims**

1. A submerged arc welding machine, comprising:

   a storage (22) storing a plurality of tables (22a, 22b) in which two or three manipulation parameters and function values are associated with each other in order to associate a plurality of the manipulation parameters for manipulating an AC waveform of a current output from a welding power supply (1) and parameters for determining the AC waveform in combination with the plurality of manipulation parameters with matching between an effective value of the output current and a predetermined current set as a constraint condition; and
   an arithmetic processor (21) configured to receive the plurality of manipulation parameters, and calculate the parameters with reference to the plurality of tables (22a, 22b) stored in the storage (22) by using the plurality of manipulation parameters,
   wherein the manipulation parameters include:
   a ratio between lengths of an electrode positive (EP) period and an electrode negative (EN) period, a ratio of peak currents in the EP period and the EN period, or a polarity switching current, and the parameters include:
   the length of the EP period, the length of the EN period, the peak current in the EP period, or the peak current in the EN period.

2. The submerged arc welding machine according to claim 1,
   wherein the arithmetic processor (21) is configured to calculate:

the peak current in the EN period and the peak current in the EP period on the basis of the following Expressions;

$$I_n = F(r, R) \times G(I_{chg}, I_{set}),$$

$$I_p = R \times I_n,$$

provided that,

$I_n$: the peak current in the EN period,
$I_p$: the peak current in the EP period,
F(r, R): a function related to the first table (22a),
$G(I_{chg}, I_{set})$: a function related to the second table (22b),
r: a ratio between lengths of the EP period and the EN period,
R: a ratio between the peak currents of the EP period and the EN period,
$I_{chg}$: polarity switching current, and
$I_{set}$: predetermined current.

3. A submerged arc welding method, comprising:

preparing a plurality of tables (22a, 22b) in which two or three manipulation parameters and function values are associated with each other in order to associate a plurality of the manipulation parameters for manipulating an AC waveform of a current output from a welding power supply (1) and parameters for determining the AC waveform in combination with the plurality of manipulation parameters with matching between an effective value of the output current and a predetermined current set as a constraint condition;
receiving the plurality of manipulation parameters; and
calculating the parameters with reference to the plurality of tables (22a, 22b) by using the plurality of received manipulation parameters, wherein the manipulation parameters include:
a ratio between lengths of an electrode positive (EP) period and an electrode negative (EN) period, a ratio of peak currents in the EP period and the EN period, or a polarity switching current, and the parameters include:
the length of the EP period, the length of the EN period, the peak current in the EP period, or the peak current in the EN period.

**Patentansprüche**

1. Unterpulver-Schweißmaschine, die Folgendes aufweist:

einen Speicher (22), der eine Vielzahl von Tabellen (22a, 22b) speichert, in denen zwei oder drei Manipulationsparameter und Funktionswerte miteinander verknüpft sind, um eine Vielzahl der Manipulationsparameter zum Manipulieren einer Wechselstromwellenform eines von einer Schweiß-Stromversorgung (1) ausgegebenen Stroms und Parameter zum Bestimmen der Wechselstromwellenform in Kombination mit der Vielzahl von Manipulationsparametern unter Übereinstimmung zwischen einem Effektivwert des Ausgangsstroms und einem vorbestimmten Strom, der als Randbedingung festgelegt ist, zu verknüpfen; und
eine Rechenverarbeitungseinheit (21), die eingerichtet ist zum Empfangen der Vielzahl von Manipulationsparametern und zum Berechnen der Parameter unter Bezugnahme auf die Vielzahl von Tabellen (22a, 22b), die in dem Speicher (22) gespeichert sind, unter Verwendung der Vielzahl von Manipulationsparametern,
wobei die Manipulationsparameter Folgendes umfassen:
ein Verhältnis zwischen den Längen einer Elektrode-Positiv-(EP- )Periode und einer Elektrode-Negativ-(EN-) Periode, ein Verhältnis der Scheitelströme in der EP-Periode und der EN-Periode oder einen Polaritätsumschaltstrom, und
wobei die Parameter Folgendes umfassen:
die Länge der EP-Periode, die Länge der EN-Periode, den Scheitelstrom in der EP-Periode oder den Scheitelstrom in der EN-Periode.

2. Unterpulver-Schweißmaschine nach Anspruch 1,

wobei die Rechenverarbeitungseinheit (21) eingerichtet ist zum Berechnen:

des Scheitelstroms in der EN-Periode und des Scheitelstroms in der EP-Periode auf der Grundlage der folgenden Ausdrücke;

$$I_n = F(r, R) \times G(I_{chg}, I_{set}),$$

$$I_p = R \times I_n,$$

vorausgesetzt, dass

$I_n$: der Scheitelstrom in der EN-Periode,
$I_p$: der Scheitelstrom in der EP-Periode,
F(r, R): eine Funktion im Zusammenhang mit der ersten Tabelle (22a),
G($I_{chg}$, $I_{set}$): eine Funktion im Zusammenhang mit der zweiten Tabelle (22b),
r: ein Verhältnis zwischen den Längen der EP-Periode und der EN-Periode,
R: ein Verhältnis zwischen den Scheitelströmen der EP-Periode und der EN-Periode,
$I_{chg}$: Polaritätsumschaltstrom, und
$I_{set}$: vorbestimmter Strom.

3. Unterpulver-Schweißverfahren, das Folgendes aufweist:

Vorbereiten einer Vielzahl von Tabellen (22a, 22b), in denen zwei oder drei Manipulationsparameter und Funktionswerte miteinander verknüpft sind, um eine Vielzahl der Manipulationsparameter zum Manipulieren einer Wechselstromwellenform eines von einer Schweiß-Stromversorgung (1) ausgegebenen Stroms und Parameter zum Bestimmen der Wechselstromwellenform in Kombination mit der Vielzahl von Manipulationsparametern unter Übereinstimmung zwischen einem Effektivwert des Ausgangsstroms und einem vorbestimmten Strom, der als Randbedingung festgelegt ist, zu verknüpfen;
Empfangen der Vielzahl von Manipulationsparametern; und
Berechnen der Parameter unter Bezugnahme auf die Vielzahl von Tabellen (22a, 22b) unter Verwendung der Vielzahl von empfangenen Manipulationsparametern,
wobei die Manipulationsparameter Folgendes umfassen:
ein Verhältnis zwischen den Längen einer Elektrode-Positiv-(EP-)Periode und einer Elektrode-Negativ-(EN-)Periode, ein Verhältnis der Scheitelströme in der EP-Periode und der EN-Periode oder einen Polaritätsumschaltstrom, und
wobei die Parameter Folgendes umfassen:
die Länge der EP-Periode, die Länge der EN-Periode, den Scheitelstrom in der EP-Periode oder den Scheitelstrom in der EN-Periode.

**Revendications**

1. Machine à souder à l'arc submergé, comprenant :

un espace de stockage (22) qui stocke une pluralité de tableaux (22a, 22b) dans lesquels deux ou trois paramètres de manipulation et valeurs de fonction sont associés les uns aux autres afin d'associer une pluralité de paramètres de manipulation pour manipuler une forme d'onde alternative AC d'un courant de sortie provenant d'une alimentation de soudage (1) et de paramètres de détermination de la forme d'onde AC en combinaison avec la pluralité de paramètres de manipulation avec une correspondance entre une valeur réelle du courant de sortie et un courant prédéterminé défini comme condition de contrainte ; et
un processeur arithmétique (21) configuré pour recevoir la pluralité de paramètres de manipulation et calculer les paramètres en référence à la pluralité de tableaux (22a, 22b) stockés dans l'espace de stockage (22) en utilisant la pluralité de paramètres de manipulation,
dans laquelle les paramètres de manipulation comportent :
un rapport entre des durées d'une période d'électrode positive (EP) et d'une période d'électrode négative (EN),
un rapport de courants de crête dans la période EP et la période EN, ou un courant de commutation de polarité, et
les paramètres comportent :

la durée de la période EP, la durée de la période EN, le courant de crête dans la période EP ou le courant de crête dans la période EN.

2. Machine à souder à l'arc submergé selon la revendication 1,
dans laquelle le processeur arithmétique (21) est configuré pour calculer :

le courant de crête pendant la période EN et le courant de crête pendant la période EP sur la base des expressions suivantes ;

$$I_n = F(r, R) \times G(I_{chg}, I_{set}),$$

$$I_p = R \times I_n,$$

étant donné que,

$I_n$ : le courant de crête pendant la période EN,
$I_p$ : le courant de crête dans la période EP,
$F(r, R)$ : une fonction liée au premier tableau (22a),
$G(I_{chg}, I_{set})$ : une fonction liée au deuxième tableau (22b),
$r$ : un rapport entre les durées de la période EP et de la période EN,
$R$ : un rapport entre les courants de pointe de la période EP et de la période EN,
$I_{chg}$ : courant d'inversion de polarité, et
$I_{set}$ : courant prédéterminé.

3. Procédé de soudage à l'arc submergé, comprenant :

la préparation d'une pluralité de tableaux (22a, 22b) dans lesquels deux ou trois paramètres de manipulation et valeurs de fonction sont associés les uns aux autres afin d'associer une pluralité de paramètres de manipulation pour manipuler une forme d'onde alternative AC d'un courant de sortie provenant d'une alimentation de soudage (1) et de paramètres de détermination de la forme d'onde AC en combinaison avec la pluralité de paramètres de manipulation avec une correspondance entre une valeur réelle du courant de sortie et un courant prédéterminé défini comme condition de contrainte ;
la réception de la pluralité des paramètres de manipulation ; et
le calcul des paramètres en référence à la pluralité de tableaux (22a, 22b) en utilisant la pluralité de paramètres de manipulation reçus, dans lequel les paramètres de manipulation comportent :
un rapport entre des durées d'une période d'électrode positive (EP) et d'une période d'électrode négative (EN),
un rapport de courants de crête dans la période EP et la période EN, ou un courant de commutation de polarité, et
les paramètres comportent :
la durée de la période EP, la durée de la période EN, le courant de crête dans la période EP ou le courant de crête dans la période EN.

FIG.1

FIG.2

Welding Power Supply 1

Rectifier 11

Primary Inverter 12

Transformer 13

Rectifier 14

DC Reactor 15

Secondary Inverter 16

Control Device 2

Arithmetic Processing Unit 21

Storage Unit 22
First Table 22a
Second Table 22b

Setting Reception Unit 23

Wire Feeding Speed Control Unit 24

Flux Supply Control Unit 25

Trolley Travel Speed Control Unit 26

Trolley 7

4 5 51 52 M 3 6 61 B 63 62 W A B 8 V 9 A

FIG.3

EP 4 509 255 B1

FIG.4

```
                        ╭─────────────╮
                        │    Start     │
                        ╰──────┬──────╯
                               │
        ┌──────────────────────┴──────────────────────┐  S11
        │     Start submerged arc welding control      │
        └──────────────────────┬──────────────────────┘
   ┌──────────────────────────▶│
   │    ┌──────────────────────┴──────────────────────┐  S12
   │    │     Receive change of manipulation parameters │
   │    └──────────────────────┬──────────────────────┘
   │    ┌──────────────────────┴──────────────────────┐  S13
   │    │ Calculate peak currents with reference to tables │
   │    └──────────────────────┬──────────────────────┘
   │    ┌──────────────────────┴──────────────────────┐  S14
   │    │            Control output current             │
   │    └──────────────────────┬──────────────────────┘
   │                           │              S15
   │          NO      ╱────────┴────────╲
   └────────────────◁      Stop?          ▷
                     ╲────────┬────────╱
                              │ YES
                        ╭─────┴──────╮
                        │    End      │
                        ╰────────────╯
```

**EP 4 509 255 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018153866 A
- US 2009261073 A
- US 2015076119 A